# FASCICULE DE BREVET EUROPEEN

(11) **EP 1 508 536 B1**
(45) Date de publication et mention de la délivrance du brevet: **22.03.2006**
(21) Numéro de dépôt: 04300489.4
(22) Date de dépôt: 28.07.2004
(51) Int. Cl.: B65F 1/10, B65F 1/14

(54) **Dispositif de remplissage d'un espace de stockage de déchets**
Vorrichtung zum Befüllen eines Müllaufbewahrungsraums
Device for filling a refuse storage space

(30) Priorité: 11.08.2003 FR 0309832
(43) Date de publication de la demande: 23.02.2005
(73) Titulaire: COMPAGNIE PLASTIC OMNIUM, 69007 Lyon (FR)
(72) Inventeur: KNOEFF, Arnoud Abraham, 9411 EL, BEILEN (NL)
(74) Mandataire: Leszczynski, André

(56) Documents cités:
- EP-A- 0 893 368
- DE-A- 19 837 453
- DE-U- 9 004 988
- DE-U- 29 923 490

## Description

La présente invention a notamment pour objet un dispositif de remplissage d'un espace de stockage de déchets, de préférence au moins partiellement enterré selon le préambule de la revendication 1.

On utilise couramment dans les zones urbaines, des corbeilles à papier disposées sur la voie publique. Ces corbeilles présentent un volume de plus en plus important afin de stocker davantage de déchets. Les corbeilles à papier sont généralement vidées manuellement. Un problème lié à des corbeilles à papier de volume important concerne leur manipulation par des opérateurs car certaines réglementations du travail interdisent de manipuler manuellement des charges trop lourdes.

Par ailleurs, une pratique actuelle pour la collecte de déchets ménagers consiste à utiliser des conteneurs de collecte de déchets comportant une cuve de stockage de déchets enterrée ou semi-enterrée, voir par exemple EP-A-0 893 368. Ce type de conteneur peut être associé à un système de contrôle permettant de contrôler l'accès au conteneur, ce système de contrôle pouvant comporter par exemple une serrure ou un lecteur de cartes permettant d'identifier un utilisateur.

Il existe notamment un besoin pour améliorer la collecte de déchets dans les zones urbaines.

L'invention répond à ce besoin grâce à un dispositif de remplissage d'un espace de stockage de déchets, de préférence au moins partiellement enterré, comportant :
- un premier accès pouvant prendre une position obturée interdisant l'introduction de déchets et une position ouverte permettant l'introduction de déchets,
- des moyens de limitation de la quantité de déchets pouvant être introduits dans le premier accès, à chaque ouverture de celui-ci,
- un deuxième accès ouvert en permanence permettant l'introduction de déchets.

On désigne par l'expression « ouvert en permanence » la possibilité pour toute personne, notamment un passant, d'introduire librement des déchets dans le deuxième accès.

Grâce à l'invention, deux types de déchets, à savoir les déchets ménagers et les déchets qui sont habituellement laissés dans les corbeilles à papier, peuvent être collectés à l'aide d'un dispositif unique, ledit deuxième accès permettant à ce dispositif de remplir la fonction de corbeille à papier.

En profitant de la présence dans les zones urbaines de conteneurs destinés actuellement exclusivement aux déchets ménagers et en ménageant dessus un deuxième accès tel que précité, il est possible, dans ces zones, de retirer les corbeilles à papier conventionnelles, ce qui peut permettre de réduire les coûts inhérents à l'ameublement urbain et au ramassage des déchets.

Par ailleurs, du fait que les conteneurs destinés aux déchets ménagers sont généralement vidés grâce à un engin de levage des véhicules de collecte de déchets, le problème précité de la manipulation manuelle de charges trop lourdes est supprimé.

En tout état de cause, le dispositif de remplissage selon l'invention peut être équipé d'éléments d'accrochage pouvant être de tout type, aptes à coopérer avec un engin de levage d'un véhicule de collecte de déchets.

Les moyens de limitation précités peuvent comporter un vide-ordures par exemple.

Le dispositif de remplissage peut comporter un système de contrôle permettant de contrôler l'obturation et l'ouverture du premier accès.

Dans un exemple de mise en oeuvre de l'invention, les premier et deuxième accès débouchent sur un passage commun vers l'espace de stockage.

De préférence, le dispositif de remplissage comportant des faces avant et arrière, le premier accès est réalisé sur l'une de ces faces et le deuxième accès sur l'autre de ces faces.

Le dispositif de remplissage peut notamment comporter une colonne de remplissage, les premier et deuxième accès étant disposés à la partie supérieure de la colonne de remplissage.

Avantageusement, la face avant présente une première couleur et la face arrière une deuxième couleur différente de la première.

Ainsi, il est possible de prévoir sur le dispositif de remplissage une signalétique basée sur un code de couleurs, la face sur laquelle le premier accès est réalisé pouvant présenter une couleur associée aux déchets ménagers et l'autre face une couleur associée aux déchets destinés habituellement aux corbeilles à papier.

Le premier accès peut être agencé pour permettre l'introduction d'un type prédéterminé de déchets, tels que du verre ou des emballages ménagers recyclables.

De préférence, les déchets ménagers auxquels le premier accès est destiné sont compatibles, du point de vue du traitement, avec les déchets habituellement collectés dans les corbeilles à papier.

Dans un exemple de mise en oeuvre de l'invention, le premier accès présente une section supérieure à celle du deuxième accès.

Le système de contrôle peut comporter un lecteur de cartes permettant d'identifier un utilisateur ou, en variante, une serrure.

L'invention a encore pour objet un conteneur de collecte de déchets comportant un dispositif de remplissage tel que défini plus haut et une cuve de stockage de déchets agencée de préférence pour être au moins partiellement ou totalement enterrée.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente, schématiquement et partiellement, un conteneur de collecte de déchets conforme à l'invention, et
- les figures 2 et 3 représentent, schématiquement et partiellement, un dispositif de remplissage du conteneur de la figure 1, respectivement vu de devant et de derrière.

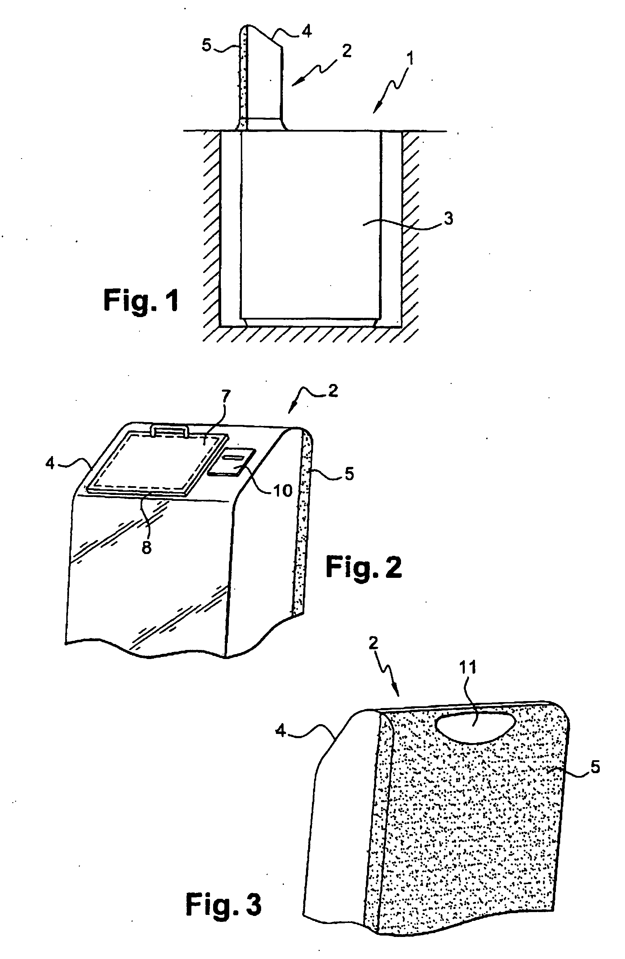

On a représenté sur la figure 1 un conteneur de collecte de déchets 1 conforme à l'invention comportant un dispositif de remplissage 2 et une cuve de stockage de déchets 3 destinée à être enterrée.

La cuve 3 peut présenter un volume d'environ 3 m³ ou 4,5 m³.

Le dispositif de remplissage 2 comporte des faces avant 4 et arrière 5, visibles respectivement sur les figures 2 et 3.

Le dispositif de remplissage 2 comporte sur la face avant 4 un premier accès 7, représenté en pointillés, pour l'introduction de déchets ménagers.

Ce premier accès 7 peut être obturé par un capot pivotant 8 mobile entre une position d'obturation du premier accès 7 et une position ouverte permettant d'introduire par cet accès 7 des déchets ménagers.

L'ouverture et la fermeture de ce capot 8 sont contrôlées par un système de contrôle comportant un lecteur de cartes 10 permettant d'identifier un utilisateur.

Dans une variante de mise en oeuvre non représentée, le système de contrôle comporte, à la place du lecteur de cartes, une serrure et un utilisateur peut ouvrir le capot à l'aide d'une clef en sa possession.

Le premier accès 7 peut être équipé d'un vide-ordures, non représenté, comportant une trappe pivotante permettant de limiter la quantité de déchets introduits par cet accès 7 à chaque ouverture.

Comme illustré sur la figure 3, le dispositif de remplissage 2 comporte sur sa face arrière 5 un deuxième accès 11 ouvert en permanence permettant à toute personne, notamment un passant, d'y introduire des déchets.

Les premier 7 et deuxième 11 accès débouchent sur un passage commun vers la cuve 3.

Ce deuxième accès 11 présente des dimensions et une forme choisies de manière à permettre l'introduction de déchets qui sont généralement destinés aux corbeilles à papier.

La section du premier accès 7 est supérieure à celle du deuxième accès 11.

Dans l'exemple considéré, la face avant 4 du dispositif de remplissage 2 présente une première couleur et la face arrière 5 une deuxième couleur différente de la première.

Ainsi, la face avant 4 peut être réalisée dans une couleur associée à des déchets ménagers et la face arrière 5 dans une couleur associée à des déchets destinés aux corbeilles à papier.

Bien entendu, l'invention n'est pas limitée à l'exemple de mise en oeuvre qui vient d'être décrit.

Le premier accès 7 peut notamment être équipé d'un réceptacle cylindrique rotatif actionné manuellement ou par un moteur, permettant de limiter la quantité de déchets introduits par cet accès 7 à chaque ouverture.

## Revendications

1. Dispositif de remplissage (2) d'un espace de stockage de déchets (3), de préférence au moins partiellement enterré, comportant :
- un premier accès (7) pouvant prendre une position obturée interdisant l'introduction de déchets et une position ouverte permettant l'introduction de déchets,
- des moyens de limitation de la quantité de déchets pouvant être introduits **caractérisé par** un deuxième accès (11) ouvert en permanence permettant l'introduction de déchets.

2. Dispositif selon la revendication précédente, **caractérisé par le fait qu'**il comporte un système de contrôle (10) permettant de contrôler l'obturation et l'ouverture dudit premier accès (7).

3. Dispositif selon la revendication 1 ou 2, **caractérisé par le fait que** les premier (7) et deuxième (11) accès débouchent sur un passage commun vers l'espace de stockage.

4. Dispositif selon l'une quelconque des revendications précédentes, comportant des faces avant (4) et arrière (5), **caractérisé par le fait que** le premier accès (7) est réalisé sur l'une de ces faces et le deuxième accès (11) sur l'autre de ces faces.

5. Dispositif selon la revendication 4, **caractérisé par le fait que** la face avant (4) présente une première couleur et la face arrière (5) une deuxième couleur différente de la première.

6. Dispositif selon l'une quelconque des revendications précédentes, **caractérisé par le fait que** le premier accès (7) est agencé pour permettre l'introduction d'un type prédéterminé de déchets, tels que du verre ou des emballages ménagers recyclables.

7. Dispositif selon l'une quelconque des revendications précédentes, **caractérisé par le fait que** le premier accès (7) présente une section supérieure à celle du deuxième accès (11).

8. Dispositif selon la revendication 2, **caractérisé par le fait que** le système de contrôle comporte un lecteur de cartes (10) permettant d'identifier un utilisateur.

9. Dispositif selon la revendication 2, **caractérisé par le fait que** le système de contrôle comporte une serrure.

10. Conteneur de collecte de déchets (1) comportant un dispositif de remplissage (2) selon l'une quelconque des revendications précédentes et une cuve de stockage de déchets (3), agencée de préférence pour être au moins partiellement ou notamment totalement enterrée.

## Patentansprüche

1. Vorrichtung (2) zum Befüllen eines Müllaufbewahrungsraumes (3), der vorzugsweise zumindest teilweise in die Erde eingelassen ist, aufweisend:
- einen ersten Zugang (7), der eine Schließposition, welche das Einfüllen von Müll verhindert, und eine Öffnungsstellung, welche das Einfüllen von Müll ermöglicht, einnehmen kann,
- Mittel zum Begrenzen der Menge an Müll können im ersten Zugang vorgesehen sein, an jeder seiner Öffnungen, **gekennzeichnet durch** einen zweiten Zugang (11), der ständig geöffnet ist und der das Einfüllen von Müll erlaubt.

2. Vorrichtung nach dem vorangegangenen Anspruche, **dadurch gekennzeichnet, dass** sie ein Steuersystem (10) aufweist, das das Schließen und das Öffnen des ersten Zugangs (7) zu steuern erlaubt.

3. Vorrichtung nach Anspruch 1 oder 2, **dadurch gekennzeichnet, dass** der erste Zugang (7) und der zweite Zugang (11) zum Aufbewahrungsraum hin in eine gemeinsame Passage münden.

4. Vorrichtung nach einem beliebigen der vorangegangenen Ansprüche, die eine Frontfläche (4) und eine Rückfläche (5) aufweist, **dadurch gekennzeichnet, dass** der erste Zugang (7) an einer dieser Flächen und der zweite Zugang (11) an der anderen dieser Flächen ausgebildet ist.

5. Vorrichtung nach Anspruch 4, **dadurch gekennzeichnet, dass** die Frontfläche (4) eine erste Farbe aufweist, und dass die Rückfläche eine zweite Farbe (5) aufweist, die von der ersten verschieden ist.

6. Vorrichtung nach einem beliebigen der vorangegangenen Ansprüche, **dadurch gekennzeichnet, dass** der erste Zugang (7) so ausgebildet ist, dass er das Eingeben einer ersten Art von Abfällen ermöglicht, wie z. B. Glas oder wiederaufbereitbare Haushaltsverpackungen.

7. Vorrichtung nach einem beliebigen der vorangegangenen Ansprüche, **dadurch gekennzeichnet, dass** der erste Zugang (7) einen größeren Querschnitt als der zweite Zugang (11) hat.

8. Vorrichtung nach Anspruch 2, **dadurch gekennzeichnet, dass** das Steuersystem ein Kartenlesegerät (10) aufweist, das den Nutzer zu identifizieren gestattet.

9. Vorrichtung nach Anspruch 2, **dadurch gekennzeichnet, dass** das Steuersystem ein Schloß aufweist.

10. Behälter (1) zum Sammeln von Müll, der eine Vorrichtung (2) zum Befüllen nach einem beliebigen der vorangegangenen Ansprüche und ein Behältnis (3) für das Aufbewahren von Müll aufweist, das so ausgebildet ist, dass es zumindest teilweise oder insbesondere vollständig in die Erde eingelassen werden kann.

## Claims

1. Device (2) for filling a refuse storage space (3), preferably at least partially underground, comprising:
- a first access (7) that can adopt a closed-off position preventing refuse from being introduced and an open position allowing refuse to be introduced,
- means for limiting the amount of refuse that can be introduced through the first access each time the latter is opened, **characterized by** a second access (11) that is permanently open allowing refuse to be introduced.

2. Device according to the preceding claim, **characterized in that** it comprises a control system (10) to control the closing-off and the opening of the said first access (7).

3. Device according to Claim 1 or 2, **characterized in that** the first (7) and second (11) accesses open on to a common passage leading towards the storage space.

4. Device according to any one of the preceding claims, comprising front (4) and rear (5) faces, **characterized in that** the first access (7) is made on one of these faces and the second access (11) is made on the other of these faces.

5. Device according to Claim 4, **characterized in that** the front face (4) is in a first colour and the rear face (5) is in a second colour, different from the first.

6. Device according to any one of the preceding claims, **characterized in that** the first access (7) is designed to allow a predetermined type of refuse such as glass or recyclable household packaging to be introduced.

7. Device according to any one of the preceding claims, **characterized in that** the first access (7) has a cross section larger than that of the second access (11).

8. Device according to Claim 2, **characterized in that** the control system comprises a card reader (10) allowing the user to be identified.

9. Device according to Claim 2, **characterized in that** the control system comprises a lock.

10. Refuse collection container (1) comprising a filling device (2) according to any one of the preceding claims, and a refuse storage bin (3) preferably designed to be at least partially, or in particular fully, sunk into the ground.
